# EUROPÄISCHE PATENTSCHRIFT

(11) **EP 1 564 868 B1**
(45) Veröffentlichungstag und Bekanntmachung des Hinweises auf die Patenterteilung: **27.09.2006**
(21) Anmeldenummer: 04029083.5
(22) Anmeldetag: 08.12.2004
(51) Int. Cl.: H02K 7/104

(54) **Elektrische Maschine**
Electric machine
Machine électrique

(30) Priorität: 16.02.2004 DE 102004007434
(43) Veröffentlichungstag der Anmeldung: 17.08.2005
(73) Patentinhaber: MINEBEA Co., Ltd., Kitasaku-gun, Nagano-ken 3849-2100 (JP)
(72) Erfinder: Gummich, Markus, 78052 VS-Pfaffenweiler (DE); Willmer, Martin, 77948 Friesenheim (DE)
(74) Vertreter: Liesegang, Eva

(56) Entgegenhaltungen:
- DE-C- 478 019
- DE-C- 648 943
- PATENT ABSTRACTS OF JAPAN Bd. 1995, Nr. 05, 30. Juni 1995 (1995-06-30) -& JP 07 046790 A (MATSUSHITA ELECTRIC IND CO LTD), 14. Februar 1995 (1995-02-14)
- PATENT ABSTRACTS OF JAPAN Bd. 2000, Nr. 16, 8. Mai 2001 (2001-05-08) -& JP 2001 008407 A (JAPAN SERVO CO LTD), 12. Januar 2001 (2001-01-12)
- PATENT ABSTRACTS OF JAPAN Bd. 1997, Nr. 05, 30. Mai 1997 (1997-05-30) -& JP 09 028056 A (MATSUSHITA ELECTRIC IND CO LTD), 28. Januar 1997 (1997-01-28)
- PATENT ABSTRACTS OF JAPAN Bd. 007, Nr. 049 (E-161), 25. Februar 1983 (1983-02-25) -& JP 57 199449 A (SHIBAURA SEISAKUSHO:KK), 7. Dezember 1982 (1982-12-07)

## Beschreibung

### GEBIET DER ERFINDUNG

Die Erfindung betrifft eine elektrische Maschine, insbesondere beispielsweise einen bürstenlosen Gleichstrommotor oder andere Permanentmagnetmotoren, die als Innenläufermotor oder Außenläufermotor konfiguriert sein können. Die Erfindung ist ohne Beschränkung auf jede Art von Elektromotor oder Generator anwendbar, sie ist jedoch der Einfachheit halber im folgenden im Kontext eines Elektromotors beschrieben.

### HINTERGRUND DER ERFINDUNG

Elektromotoren mit einer Innenläuferkonfiguration weisen eine Rotoranordnung auf, die auf der Motorwelle montiert ist und einen oder mehrere Magnete, wie Permanentmagnete, umfaßt, sowie eine Statoranordnung aus z.B. einer Anzahl von paketierten Metallblechen, die einen ringförmigen Statorrückschluß und von dem Statorrückschluß nach innen abstehende Polschuhe bilden. Auf die Polschuhe sind Phasenwicklungen aufgebracht. Die Rotoranordnung ist koaxial in die Statoranordnung eingefügt. Bei einer Außenläuferkonfiguration umgibt die Rotoranordnung den Stator.

Der erfindungsgemäße Elektromotor kann als Antriebseinheit oder Stellvorrichtung für beliebige bewegliche Teile eingesetzt werden. Zur Erläuterung des der Erfindung zugrundeliegenden Problems sei der Fall angenommen, daß der Elektromotor eine Klappe betätigt, welche in einem Durchgang liegt, der bei Auftreten einer Störung, z.B. einem Stromausfalls, sicher und schnell verschlossen werden muß. Um ein schnelles und sicheres Verschließen der Klappe auch bei Stromausfall zu gewährleisten, kann diese mit einem Mechanismus verbunden sein, der bei Vorliegen der Störung unabhängig vom Betrieb des Elektromotors auslöst und dadurch die Klappe ohne Verzögerung und sehr schnell mechanisch schließt. Die Bewegung der Klappe beim Schließen wird, gegebenenfalls über ein zwischengeschaltetes Getriebe, auf die Motorwelle übertragen, wodurch die Motorwelle durch die äußere Krafteinwirkung, unter Umständen sehr schnell, angetrieben wird. Ist die Klappe vollständig geschlossen, so kann die aufgrund der schnellen externen Drehung in dem Motor gespeicherte Energie das zwischengeschaltete Getriebe, insbesondere die erste Stufe des Getriebes, oder andere mechanische Komponenten des Antriebs-Systems beschädigen. Es ist zwar möglich, an dem Motor eine externe Bremse zur Abdämpfung der externen Drehung vorzusehen, dies ist jedoch mit erheblichen Aufwand verbunden, insbesondere wenn die Bremse abhängig von einem Störzustand der angetriebenen Einheit betätigt werden soll. Im Falle eines Stromausfalls kann ferner nicht sichergestellt werden, daß die Bremse zuverlässig arbeitet.

Das beschriebene sowie ähnliche Probleme treten im Stand der Technik immer dann auf, wenn ein Elektromotor durch einen äußeren Antrieb des Motors auf sehr hohe Drehzahlen beschleunigt werden kann und dies insbesondere bei einem Stromausfall.

JP 07 046790 A beschreibt einen Elektromotor mit eingebauter Bremse, die aus einem feststehenden, mehrpoligen Magneten sowie einem beweglichen kammartig ausgebildeten Bauteil aus magnetischem Material, welche zueinander beweglich sind, aufgebaut ist. Durch diese Anordnung wird eine semipermanente Magnetbremse gebildet.

JP 2001 008407 A beschreibt einen Elektromotor mit einer Wirbelstrombremse, die einen Permanentmagneten am Außenumfang einer Nabe und einen radial außerhalb des Permanentmagneten angeordneten elektrischen Leiter, der dem Magneten gegenüberliegt, aufweist. Der Permanentmagnet kann in radialer Richtung nach außen bewegt werden, um in dem Leiter einen Wirbelstrom zu induzieren und dadurch eine Bremskraft auf dem Motor auszuüben.

Die JP 09 028056 A beschreibt einen Elektromotor mit eingebauter elektromagnetischer Bremse bestehend aus einem feststehenden Teil und einem mit dem Rotor verbundenen Teil. Der feststehende Teil ist mit dem Gehäuse festverbunden, wobei der genaue Aufbau der einzelnen Teile und ihr Material nicht beschrieben sind.

Die DE 684 943 beschreibt ebenfalls einen Elektromotor mit Wirbelstrombremse.

Diese Aufgabe wird durch eine elektrische Maschine mit dem Merkmalen von Anspruch 1 gelöst.

Die Erfindung sieht eine elektrische Maschine mit einem Rotor, einem Stator und einer Welle vor, welche koaxial zu einer Rotationsachse angeordnet sind. Erfindungsgemäß ist in der elektrischen Maschine eine Wirbelstrombremse ausgebildet, die mindestens einen Bremsmagneten zum Erzeugen eines Magnetfelds aufweist, das bei Drehung der elektrischen Maschine in einem Leiter einen Wirbelstrom induziert, um die elektrische Maschine drehzahlabhängig abzubremsen. Der Magnet und der Leiter der Wirbelstrombremse sind in der elektrischen Maschine derart angeordnet, daß sie bei Drehung des Rotors relativ zueinander bewegt werden und der Magnet so in dem Leiter einen Wirbelstrom induziert. Vorzugsweise ist der Magnet der Wirbelstrombremse mit dem Rotor der elektrischen Maschine drehfest gekoppelt und der Leiter ist einem feststehenden leitenden Bauteil, wie einer Metallplatte oder einem Metallflansch, an einem Stirnende des Elektromotors zugeordnet, wobei gemäß der Erfindung ein an und für sich vorhandener Flansch der elektrischen Maschine als Leiter der Wirbelstrombremse dient.

Allgemein ist es die Aufgabe der Erfindung, eine elektrische Maschine mit einer Bremse, welche ohne Hilfsenergie arbeitet, anzugeben. Spezieller soll eine elektrische Maschine vorgesehen werden, bei welcher auch bei einem Stromausfall eine von außen bewirkte Beschleunigung der Maschine auf hohe Drehzahlen verhindert werden kann.

### ABRISS DER ERFINDUNG

Wirbelstrombremsen sind grundsätzlich bekannt und beispielsweise beschrieben in dem U.S.-Patent 6,338,142; U.S.-Patent 5,054,587; U.S.-Patent 4,517,505; und DE 101 22 985 A1. Im Stand der Technik werden Wirbelstrombremsen häufig als Hilfsbremse in Kraftfahrzeugen eingesetzt. In der DE 101 22 985 dient die Wirbelstrombremse zum Untersuchen von Kraftmaschinen.

Wirbelstrombremsen umfassen üblicherweise einen scheiben- oder glockenförmigen Leiter, der in einem feststehenden Elektromagnetfeld bewegt wird; siehe hierzu z.B. die DE 36 02 612 oder die DE 15 38 899. Eine Abfolge unterschiedlich gepolter Elektro- oder Permanentmagnete ist vorgesehen, so dass der Leiter sich in einem sich ändernden Magnetfeld bewegt.

Die Integration einer Wirbelstrombremse in eine elektrische Maschine hat den besonderen Vorteil, daß die Wirbelstrombremse in der elektrischen Maschine auf einfachste Weise realisiert werden kann und wenigstens teilweise in der elektrische Maschine an und für sich vorhandene Komponenten nutzt.

In der bevorzugten Ausführung der Erfindung ist der Magnet der Wirbelstrombremse (Bremsmagnet) mit dem Rotor drehfest gekoppelt und umfaßt insbesondere einen Magnetring, der zu der Rotationsachse koaxial angeordnet und über ein Trägerbauteil an dem Rotor angebracht ist. Das Trägerbauteil kann zusätzlich die Funktion eines Rückschlusses für den Bremsmagneten haben. Der Leiter der Wirbelstrombremse wird durch einen Flansch an einem Abtriebsende des Elektromotors gebildet, und insbesondere durch einen Aluminiumflansch.

Erfindungsgemäß kann somit eine elektrische Maschine mit integrierter Wirbelstrombremse vorgesehen werden, wobei der Leiter der Wirbelstrombremse durch den ohnehin vorhandenen Aluminiumflansch realisiert wird. Hierzu ist die Oberfläche des Flansches auf der den Bremsmagneten zugewandten Seite bevorzugt eben ausgestaltet, so daß er einen möglichst geringen Abstand zu den Bremsmagneten haben kann, welche die Wirbelströme generieren. Dies ermöglicht wiederum die Verwendung von Magneten mit einer relativ geringen magnetischen Feldstärke, z.B. im Bereich 0,5 Tesla (Ferritmagnete).

Erfindungsgemäß kann die Wirbelstrombremse der elektrischen Maschine ständig aktiv sein, weil ihre Wirkung drehzahlabhängig ist. Die Wirbelstrombremse ist zu diesem Zweck derart dimensioniert, daß ihre Bremswirkung und damit auch die durch die Wirbelströme erzeugte Wärme bei den normalen Arbeitsdrehzahlen der elektrischen Maschine vernachlässigbar ist. Wenn jedoch der Motor durch einen externen Antrieb sehr plötzlich auf eine hohe Drehzahl beschleunigt wird, die deutlich über ihrer normalen Nenndrehzahl liegt, erzeugt die Wirbelstrombremse aufgrund ihrer stark nicht-linearen Kennlinie ein merkliches Bremsmoment und bremst den Motor auf einen sicheren Drehzahlbereich ab. Die Wirkung der Wirbelstrombremse, d.h. die von ihr drehzahlabhängig erzeugte Bremskraft, ist vorzugsweise einstellbar.

In einer weiteren bevorzugten Ausführung der Erfindung sind der Magnet und der Leiter der Wirbelstrombremse koaxial zur Rotationsachse, in axialer Richtung einandergegenüberliegend derart angeordnet, daß der Abstand zwischen dem Magneten und dem Leiter abhängig von der Drehzahl des Motors variiert. Dies wird insbesondere durch ein Fliehkraftmechanismus zur Veränderung des Abstandes realisiert.

Wie im Stand der Technik ist der Wirbelstromleiter auch bei der Erfindung vorzugsweise aus einem nicht-ferromagnetischen und elektrisch leitenden Material, wie Aluminium oder Kupfer, hergestellt.

### KURZE BESCHREIBUNG DER FIGUR

Die Erfindung ist im folgenden anhand einer bevorzugten Ausführung eines Elektromotors mit Bezug auf die Zeichnung erläutert.

Die einzige Figur zeigt eine Längsschnittdarstellung durch einen Elektromotor gemäß der Erfindung.

### AUSFÜHRLICHE BESCHREIBUNG DER BEVORZUGTEN AUSFÜHRUNG

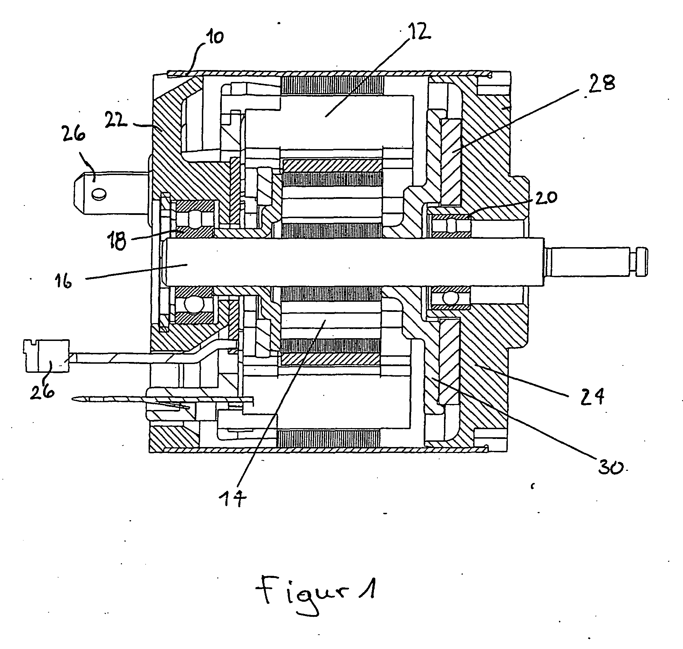

Der in Fig. 1 gezeigte Elektromotor umfaßt ein Gehäuse 10, in dem eine Statoranordnung 12 und eine Rotoranordnung 14 angeordnet sind. Die Statoranordnung 12 umfaßt einen Statorkern, z.B. aus einem Blechpaket, mit daran aufgebrachten Phasenwicklungen. Die Rotoranordnung 14 umfaßt einen Rotorrückschluß mit in radialer Richtung magnetisierten Permanentmagneten darauf. Der Rotorrückschluß kann ebenfalls durch ein Blechpaket gebildet sein. Der Rotor 14 ist auf eine Welle 16 aufgebracht, welche über Lager 18, 20 drehbar gelagert ist. Das Lager 18 ist in einem ersten Flansch 22 auf der Anschlußseite des Elektromotors eingespannt, und das Lager 20 ist in einem zweiten Flansch 24 auf der Abtriebsseite des Motors eingespannt. Die Flansche 22, 24 sind vorzugsweise aus Aluminium oder einer Aluminiumlegierung hergestellt. Auf der Anschlußseite des Elektromotors sind ferner elektrische Anschlüsse 26 des Elektromotors für Stromversorgung und Motorsensorik dargestellt.

Der in der Figur gezeigte Elektromotor umfaßt ferner eine Wirbelstrombremse, welche gebildet wird durch das Zusammenwirken des zweiten Flansches 24 mit gegenüberliegenden Bremsmagneten 28, welche über einen Träger 30 mit dem Rotor 14 drehfest verbunden sind. Der Träger 30 bildet einen Rückschluß für die Bremsmagnete 28 der Wirbelstrombremse. Die den Bremsmagneten 28 gegenüberliegende Fläche des Flansches 24 ist vorzugsweise eben ausgebildet, um einen möglichst geringen Abstand zwischen den Bremsmagneten 28 und dem Leiter der Wirbelstrombremse, der durch den Flansch 24 gebildet wird, vorsehen zu können. In der gezeigten Ausführung wird der Bremsmagnet 28 gebildet durch einen Magnetring, der in axialer Richtung mehrpolig, z.B. 16-polig, magnetisiert ist.

Die Wirbelstrombremse gemäß der Erfindung arbeitet wie folgt. Grundsätzlich wirkt die Wirbelstrombremse in beiden Drehrichtungen, jedoch nicht bei einer Drehzahl von Null. Nach dem Ferraris'schen Prinzip bilden sich durch die Relativbewegung zwischen dem Bremsmagnet 28 und dem Flansch 24, welcher den Wirbelstromleiter bildet, in dem Leiter Wirbelströme aus, deren Magnetfelder entsprechend der Lenz'schen Regel den Magnetfeldänderungen des Bremsmagnets 28 entgegenwirken. Dadurch wird der Bremsmagnet 28 und somit der Rotor 14 abgebremst, wobei das Bremsmoment abhängig von der Drehzahl ist. Die Bremswirkung ist jedoch nicht linear, und die Wirbelstrombremse wird so dimensioniert, daß sie im Bereich der normalen Arbeitsdrehzahl des Elektromotors einen sehr geringen bzw. vernachlässigbaren Einfluß hat. Die Arbeitsdrehzahlen können beispielsweise in dem Bereich von 0 bis 1500 Umdrehung pro Minute liegen. Bei geeigneter Dimensionierung der Bremsmagnete 28 im Verhältnis zu der Fläche des Flansches 24 und im Verhältnis zum Abstand der Bremsmagnete zu dem Flansch 24 ist es nicht notwendig, eine ein- und ausschaltbare Bremse zu verwenden, sondern die Wirbelstrombremse kann im Betrieb mitlaufen. Der Abstand der Bremsmagnete 28 zum Flansch 24 kann in der Größenordnung der Arbeitsluftspalts liegen.

Wird nun die Welle 16 des Elektromotors durch eine externe Kraft plötzlich und stark auf eine Drehzahl beschleunigt, die deutlich über der Nenndrehzahl liegt und insbesondere um eine oder mehrere Größenordnungen größer als die Nenndrehzahl ist, beim vorliegenden Beispiel etwa in einem Bereich von 10000 bis 50000 Umdrehung pro Minute, werden durch die Relativdrehung von Magnet 28 und Flansch 24 sehr große Wirbelströme induziert, die eine Bremswirkung auf den Elektromotor ausüben und bei geeigneter Dimensionierung die Motordrehzahl auf einen sicheren Drehzahlbereich begrenzen, wodurch verhindert wird, daß mechanische Teile des Motors oder eines angeschlossenen Getriebes oder andere mechanische Teile im System beschädigt werden. Die Wirbelstrombremse wirkt sowohl während der Beschleunigung des Motors als auch während des Abbremsens, nachdem die externe Kraft wieder entfallen ist, und ist nur abhängig von der absoluten Drehzahl des Motors.

Die Leistung der Bremse ist durch die Dimensionierung des Flansches 24 und der Bremsmagnete 28 sowie durch deren relative Montage einstellbar.

In einer besonders bevorzugten Ausführung der Erfindung, die in den Figuren nicht im einzelnen dargestellt ist, ist der Abstand zwischen den Bremsmagneten 28 und dem Flansch 24 beispielsweise durch einen Fliehkraftmechanismus abhängig von der Drehzahl veränderbar, um die Wirkung der Wirbelstrombremse bei geringen Drehzahlen noch stärker zu reduzieren und bei hohen Drehzahlen zu verstärken. Hierzu wird der Abstand zwischen der Bremsmagnete 28 und dem Flansch 24 bei zunehmenden Drehzahlen vermindert.

### Bezugszeichenliste

- 10: Gehäuse
- 12: Statoranordnung
- 14: Rotoranordnung
- 16: Welle
- 18,20: Lager
- 22, 24: Flansch
- 26: elektrische Anschlüsse
- 28: Bremsmagnet
- 30: Träger

## Patentansprüche

1. Elektrische Maschine mit einem Rotor (14), einem Stator (12) und einer Welle (16), die koaxial zu einer Rotationsachse angeordnet sind, und mit einer Wirbelstrombremse, die mindestens einen Bremsmagneten (28) zum Erzeugen eines Magnetfeldes aufweist, der bei einer Drehung der elektrischen Maschine in einem Leiter einen Wirbelstrom induziert, um die elektrische Maschine drehzahlabhängig abzubremsen, wobei der Leiter der Wirbelstrombremse durch ein feststehendes elektrisch leitendes Bauteil gebildet ist, das zu der Rotationsachse koaxial angeordnet ist und dem Bremsmagneten (28) gegenüberliegt, **dadurch gekennzeichnet, daß** das elektrisch leitende Bauteil ein Flansch (24) an einem Stirnende der elektrischen Maschine ist.

2. Elektrische Maschine nach Anspruch 1, **dadurch gekennzeichnet, daß** der Bremsmagnet (28) der Wirbelstrombremse mit dem Rotor (14) drehfest gekoppelt ist.

3. Elektrische Maschine nach Anspruch 2, **dadurch gekennzeichnet, daß** der Bremsmagnet (28) der Wirbelstrombremse einen Magnetring umfaßt, der zu der Rotationsachse koaxial angeordnet und an dem Rotor (14) angebracht ist.

4. Elektrische Maschine nach Anspruch 3, **dadurch gekennzeichnet, daß** der Magnetring (28) über ein Trägerbauteil (30) an dem Rotor (14) angebracht ist und das Trägerbauteil (30) einen Rückschluß für den Magnetring umfaßt.

5. Elektrische Maschine nach Anspruch 3 oder 4, **dadurch gekennzeichnet, daß** der Magnetring (28) in axialer Richtung mehrpolig magnetisiert ist.

6. Elektrische Maschine nach einem der vorangehenden Ansprüche, **dadurch gekennzeichnet, daß** die dem Bremsmagneten (28) zugewandte Oberfläche des Flansches (24) eben ist.

7. Elektrische Maschine nach einem der vorangehenden Ansprüche, **dadurch gekennzeichnet, daß** der Flansch aus Aluminium oder Kupfer hergestellt ist.

8. Elektrische Maschine nach einem der vorangehenden Ansprüche, **dadurch gekennzeichnet, daß** der Bremsmagnet (28) und der Leiter der Wirbelstrombremse koaxial zu der Rotationsachse, in axialer Richtung einander gegenüberliegend derart angeordnet sind, daß der Abstand zwischen dem Bremsmagneten (28) und dem Leiter abhängig von der Drehzahl der elektrischen Maschine durch einen Fliehkraftmechanismus veränderbar ist.

## Claims

1. Electric machine comprising a rotor (14), a stator (12), and a shaft (16) arranged coaxially with respect to a rotation axis, and with an eddy-current brake having at least one brake magnet (28) for generating a magnetic field, said brake magnet (28) inducing an eddy current in a conductor upon rotation of said electric machine so as to brake the electric machine depending on the rotation speed, wherein said conductor of said eddy-current brake is formed by a stationary, electrically conducting component arranged coaxially with respect to the rotation axis and opposite to said brake magnet (28), **characterized in that** said electrically conducting component is a flange (24) at an end face of said electric machine.

2. Electric machine according to claim 1, **characterized in that** said brake magnet (28) of said eddy-current brake is non-rotationally coupled to said rotor (14).

3. Electric machine according to claim 2, **characterized in that** said brake magnet (28) of said eddy-current brake comprises a magnetic ring arranged coaxially with respect to the rotation axis and attached to said rotor (14).

4. Electric machine according to claim 3, **characterized in that** said magnetic ring (28) is attached to said rotor (14) via a support component (30), and said support component (30) comprises a flux path for said magnetic ring.

5. Electric machine according to claim 3 or 4, **characterized in that** said magnetic ring (28) is magnetized multipolarly in the axial direction.

6. Electric machine according to one of the preceding claims, **characterized in that** the surface of said flange (24) facing said brake magnet (28) is planar.

7. Electric machine according to one of the preceding claims, **characterized in that** said flange is made of aluminum or copper.

8. Electric machine according to one of the preceding claims, **characterized in that** said brake magnet (28) and said conductor of said eddy-current brake are arranged coaxially with respect to the rotation axis in the axial direction mutually opposite to each other such that the distance between the brake magnet (28) and the conductor can be varied by a centrifugal mechanism depending on the rotation speed of the electric machine.

## Revendications

1. Machine électrique comportant un rotor (14), un stator (12) et un arbre (16), qui sont agencés coaxialement par rapport à un axe de rotation, et un frein à courant de Foucault, qui présente au moins un aimant-frein (28) destiné à la génération d'un champ magnétique, qui induit un courant de Foucault dans un conducteur lors d'une rotation de la machine électrique afin de freiner la machine électrique en fonction du régime, le conducteur du frein à courant de Foucault étant formé par un composant conducteur électrique fixe, qui est agencé coaxialement par rapport à l'axe de rotation et qui fait face à l'aimant-frein (28), **caractérisée en ce que** le composant conducteur électrique est une bride (24) au niveau d'une extrémité frontale de la machine électrique.

2. Machine électrique selon la revendication 1, **caractérisée en ce que** l'aimant-frein (28) du frein à courant de Foucault est couplé solidaire en rotation avec le rotor (14).

3. Machine électrique selon la revendication 2, **caractérisée en ce que** l'aimant-frein (28) du frein à courant de Foucault comprend un anneau magnétique, qui est agencé coaxialement par rapport à l'axe de rotation et est placé sur le rotor (14).

4. Machine électrique selon la revendication 3, **caractérisée en ce que** l'anneau magnétique (28) est placé sur le rotor (14) par l'intermédiaire d'un composant support (30) et le composant support (30) comprend un blindage pour l'anneau magnétique.

5. Machine électrique selon la revendication 3 ou 4, **caractérisée en ce que** l'anneau magnétique (28) est magnétisé de manière multipolaire dans le sens axial.

6. Machine électrique selon l'une quelconque des revendications précédentes, **caractérisée en ce que** la surface de la bride (24) tournée vers l'aimant-frein (28) est plane.

7. Machine électrique selon l'une quelconque des revendications précédentes, **caractérisée en ce que** la bride est fabriquée en aluminium ou en cuivre.

8. Machine électrique selon l'une quelconque des revendications précédentes, **caractérisée en ce que** l'aimant-frein (28) et le conducteur du frein à courant de Foucault sont agencés coaxialement par rapport à l'axe de rotation, se faisant face dans le sens axial, de telle manière que l'écartement entre l'aimant-frein (28) et le conducteur est modifiable en fonction du régime de la machine électrique grâce à un mécanisme à force centrifuge.
